# FASCICULE DE BREVET EUROPEEN

(11) **EP 4 153 517 B1**
(45) Date de publication et mention de la délivrance du brevet: **24.04.2024**
(21) Numéro de dépôt: 20848799.1
(22) Date de dépôt: 16.12.2020
(51) Int. Cl.: B65H 29/56, B29C 48/07, B29C 48/35

(54) **DISPOSITIF DE SÉPARATION PERMETTANT DE PRÉLEVER UN PROFILÉ SUR UNE SURFACE DE CONVOYAGE, ET MACHINE D'EXTRUSION POURVUE D'UN TEL DISPOSITIF DE SÉPARATION**
TRENNVORRICHTUNG ZUM ENTFERNEN EINES PROFILS VON EINER FÖRDERFLÄCHE UND EXTRUSIONSMASCHINE MIT EINER SOLCHEN TRENNVORRICHTUNG
SEPARATION DEVICE FOR REMOVING A PROFILE MEMBER FROM A CONVEYING SURFACE, AND EXTRUSION MACHINE PROVIDED WITH SUCH A SEPARATION DEVICE

(30) Priorité: 24.12.2019 FR 1915528
(43) Date de publication de la demande: 29.03.2023
(73) Titulaire: COMPAGNIE GENERALE DES ETABLISSEMENTS MICHELIN, 63000 Clermont-Ferrand (FR)
(72) Inventeur: MOSNIER, Thomas, 63040 CLERMONT-FERRAND Cedex 9 (FR); OUGIER, Christophe, 63040 CLERMONT-FERRAND Cedex 9 (FR); TORRES-CASTELLANO, Miguel, 63040 CLERMONT-FERRAND Cedex 9 (FR)
(74) Mandataire: M.F.P. Michelin
(86) Numéro de dépôt international: PCT/FR2020/052478
(87) Numéro de publication internationale: WO 2021/130438

(56) Documents cités:
- JP-A- S6 221 513
- US-A- 3 926 429
- US-A- 4 443 101
- US-A1- 2013 334 729

## Description

La présente invention concerne un dispositif de séparation selon les revendications annexées 1 - 12.

Des dispositifs de séparation sont notamment connues par les documents US-2013/334729, JP-S62 215 13, US-4 443 101, et US 3 926 429, qui décrivent différentes installations permettant de produire ou traiter un objet allongé, tel qu'un profilé ou un film, à travers un chemin qui comprend plusieurs surfaces de convoyage successives, formées par des rouleaux et/ou des bandes convoyeuses.

L'invention concerne plus particulièrement une installation d'extrusion selon les revendications annexées 13 - 15.

Il est notamment connu d'utiliser des dispositifs de séparation utilisant une pince, qui vient saisir le front avant du profilé sur la surface de convoyage amont pour décoller ledit profilé de ladite surface et le poser sur la surface réceptrice aval.

Dans certaines conditions, et notamment lorsque le profilé présente une grande malléabilité et/ou une forte adhérence à la surface de convoyage amont, comme cela est par exemple le cas pour des profilés à base de caoutchouc non vulcanisé, tels que les profilés destinés à la fabrication de bandages pneumatiques, de tels dispositifs à pince peuvent parfois déformer ou endommager le profilé, voire endommager la surface de convoyage, par exemple en la rayant.

Il peut également se produire un engorgement (ou « bourrage ») provoqué par une accumulation du matériau constitutif du profilé entre la pince et l'une ou l'autre des surfaces de convoyage amont et aval. Une telle situation de bourrage requiert de stopper la production pour nettoyer l'installation.

Les objets assignés à l'invention visent par conséquent à remédier aux inconvénients susmentionnés et proposer un nouveau dispositif de séparation qui permette de prélever de façon reproductible et fiable un profilé sur une surface de convoyage.

Les objets assignés à l'invention sont atteints au moyen d'un dispositif de séparation destiné à séparer un profilé d'une surface de convoyage qui convoie ledit profilé selon une direction longitudinale de sorte à acheminer le profilé selon un mouvement d'avance dans le sens duquel ledit profilé se présente par une extrémité libre dite « front avant », ledit dispositif étant caractérisé en ce qu'il comprend un rouleau de décollement qui est monté rotatif sur un support autour d'un axe dit « axe de décollement », et qui est destiné à s'interposer entre le profilé et la surface de convoyage pour provoquer le décollement du profilé de ladite surface de convoyage, ledit support et le rouleau de décollement étant agencés pour pouvoir adopter une configuration dite « configuration d'engagement » selon laquelle l'axe de décollement est orienté transversalement, de préférence perpendiculairement, à la direction longitudinale et parallèlement à la surface de convoyage, et selon laquelle l'axe de décollement est situé à une distance de la surface de convoyage qui est telle que d'une part un interstice subsiste entre ledit rouleau de décollement et la surface de convoyage, que d'autre part le rouleau de décollement forme une butée qui s'oppose à la progression du front avant du profilé sur la surface de convoyage et empêche ledit front avant de franchir l'interstice, et que, enfin, l'on puisse générer une rotation du rouleau de décollement autour de l'axe de décollement, dite « rotation de décollement », qui contraint le front avant du profilé à se décoller de la surface de convoyage pour que le profilé puisse poursuivre son mouvement d'avance en contournant et franchissant le rouleau de décollement à l'opposé de l'interstice, en suivant ladite rotation de décollement.

Avantageusement, par un choix judicieux de la distance de l'axe de décollement à la surface de convoyage, le rouleau de décollement selon l'invention est placé suffisamment près de la surface de convoyage pour barrer la trajectoire du profilé, et ainsi intercepter le front avant du profilé, lorsque ledit front avant du profilé parvient face audit rouleau de décollement, si bien que ledit profilé est contraint, pour poursuivre sa progression, de franchir ledit rouleau de décollement en contournant ledit rouleau de décollement, ce qui force ledit profilé à se soulever et s'écarter de la surface de convoyage.

Dans le même temps, le rouleau de décollement reste suffisamment distant de la surface de convoyage, grâce à l'interstice, pour ne pas toucher la surface de convoyage, et ainsi être libre de tourner dans le sens de la rotation de décollement sans interférer avec ladite surface de convoyage, ce qui permet au rouleau de décollement d'accompagner le décollement et la progression du profilé.

En définitive le rouleau de décollement selon l'invention peut donc avantageusement fonctionner par pelage, sensiblement à la manière d'un coin, ici un coin rotatif, qui pénètre entre le profilé et la surface de convoyage, et qui permet ainsi à la face du profilé qui est initialement au contact de la surface de convoyage de quitter la surface de convoyage et de poursuivre sa progression d'un côté du rouleau de décollement, en roulant sur ledit rouleau de décollement, ici sur la portion du rouleau de décollement qui est diamétralement opposée à l'interstice, tandis que la surface de convoyage, libérée du profilé, poursuit sa progression de l'autre côté du rouleau, du côté de l'interstice, puis au-delà dudit interstice.

Grâce à l'invention, le profilé peut donc être prélevé en douceur, par pelage, sur la surface de convoyage, et être dévié de ladite surface de convoyage, de manière progressive, et notamment en suivant une trajectoire guidée dont la courbure est suffisamment grande pour ne pas être dommageable au profilé, pour être acheminé jusque sur une surface réceptrice, telle qu'une bande de convoyeur, disposée en aval du dispositif séparateur.

Avantageusement, l'utilisation d'un rouleau de décollement selon l'invention évite les bourrages, dans la mesure où ledit rouleau de décollement évite que le profilé ne s'engage dans l'interstice, au risque d'y être laminé et bloqué, et évite de même que le front avant du profilé ne reste bloqué en butée contre le rouleau de décollement, puisque la rotation de décollement dirige ledit front avant du profilé vers l'espace dégagé que constitue la portion du rouleau de décollement située à l'opposé de l'interstice et de la surface de convoyage par rapport à l'axe de décollement, renvoyant ainsi le profilé par-dessus le rouleau de décollement.

Avantageusement, la prise en charge du profilé par le rouleau de décollement peut s'effectuer quelle que soit l'épaisseur effective du front avant du profilé, pourvu que la configuration d'engagement, et en particulier le dimensionnement du rouleau de décollement et de l'interstice, aient été déterminés en conséquence.

On notera en particulier que, de façon particulièrement avantageuse, une configuration d'engagement apte à décoller un profilé d'épaisseur nominale déterminée sera apte à décoller un profilé possédant une épaisseur supérieure, et que, en particulier, le dispositif de séparation selon l'invention accommodera sans difficulté une éventuelle surépaisseur de type bourrelet ou pli qui affecterait le front avant du profilé.

D'autres objets, caractéristiques et avantages de l'invention apparaîtront plus en détail à la lecture de la description qui suit, ainsi qu'à l'aide des dessins annexés, fournis à titre purement illustratif et non limitatif, parmi lesquels :

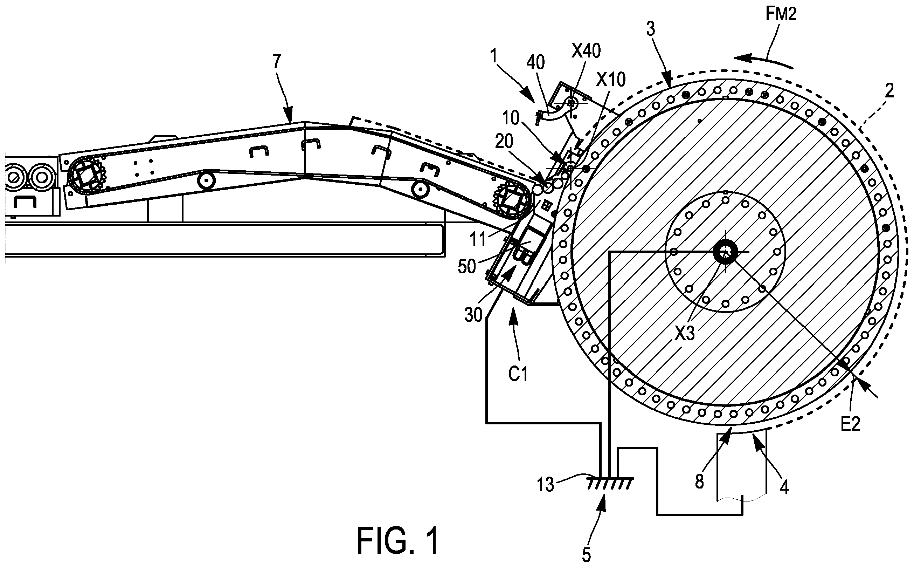

La figure 1 illustre, selon une vue en coupe de côté, une installation d'extrusion comprenant un dispositif de séparation selon l'invention permettant de prélever un profilé extrudé sur une surface de convoyage qui est formée par un rouleau principal.

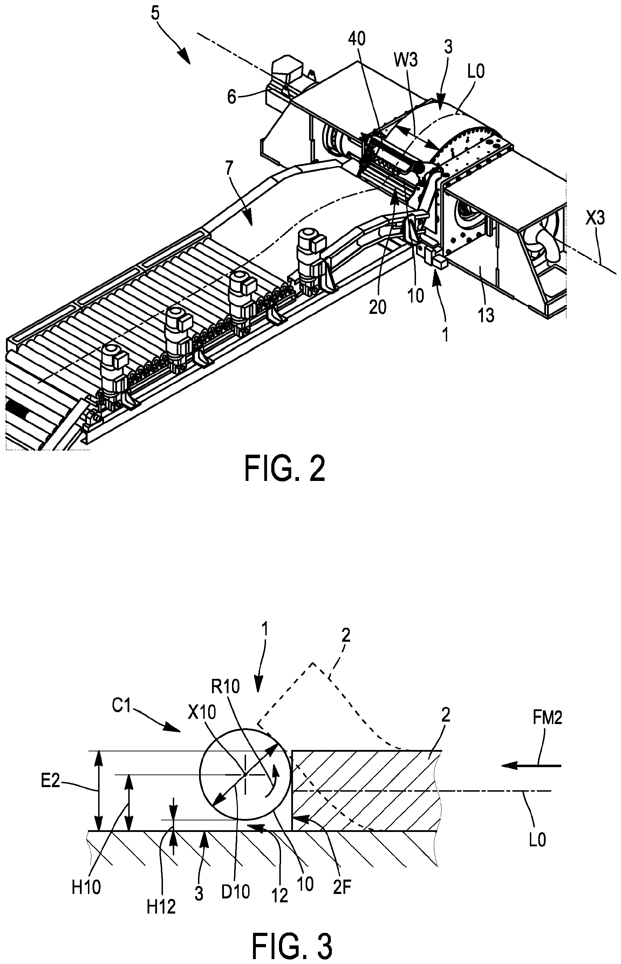

La figure 2 est une vue en perspective de l'installation de la figure 1.
La figure 3 illustre, selon une vue schématique de côté, le principe du pelage réalisé par un rouleau de décollement selon l'invention.

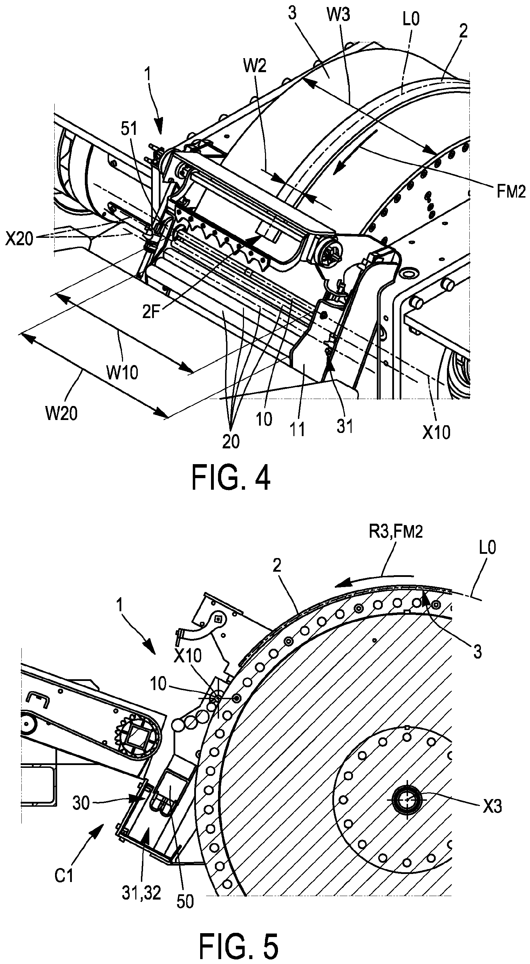

Les figures 4 et 5 illustrent, respectivement selon des vues en perspective et en coupe de côté, une première phase de convoyage d'un profilé au sein de l'installation des figures 1 et 2, au cours de laquelle, au début d'un cycle de production, on fait progresser le profilé en direction du rouleau de décollement.

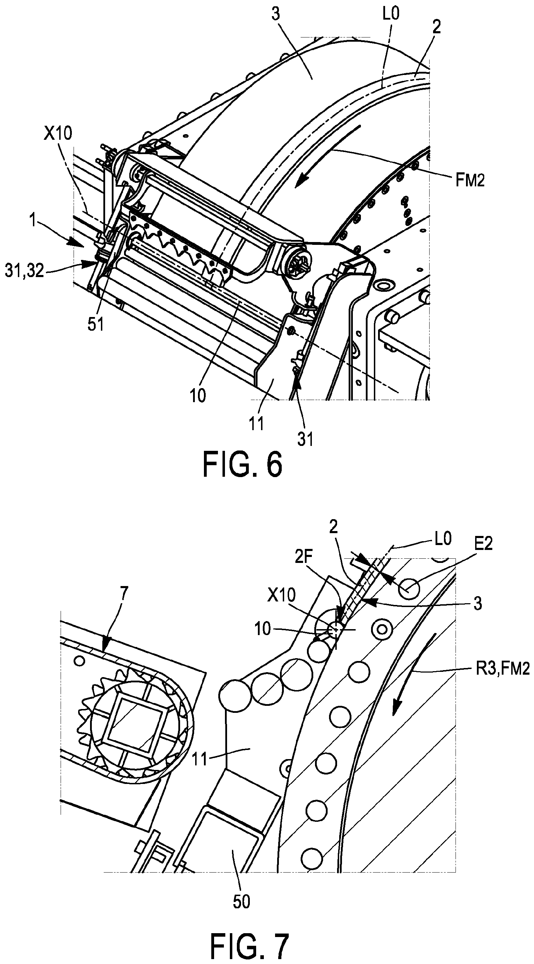

Les figures 6 et 7 illustrent, respectivement selon des vues en perspective et en coupe de côté, une seconde phase de convoyage d'un profilé au sein de l'installation des figures 1 et 2, au cours de laquelle le front avant du profilé arrive au contact du rouleau de décollement, en butant contre ledit rouleau de décollement.

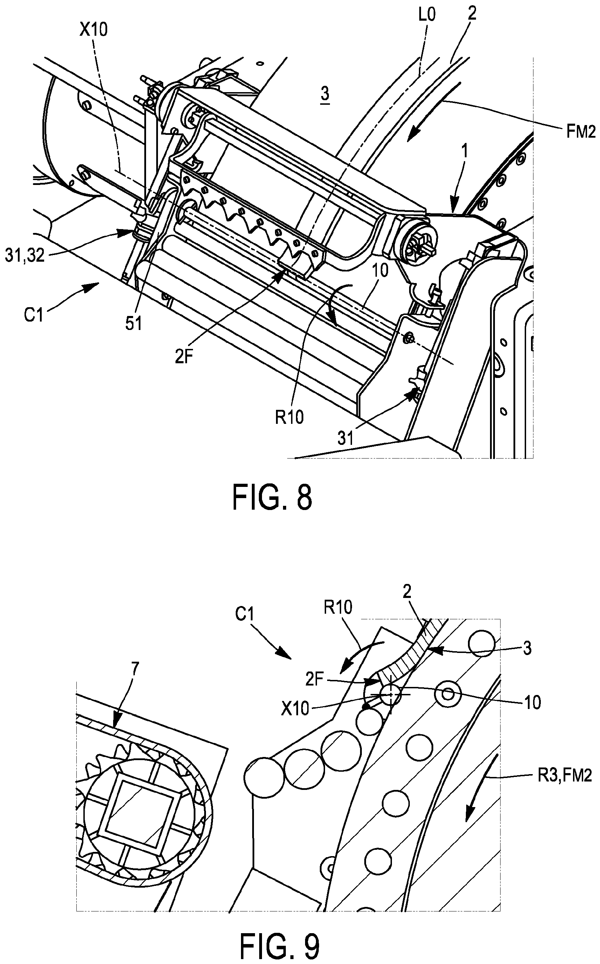

Les figures 8 et 9 illustrent, respectivement selon des vues en perspective et en coupe de côté, une troisième phase de convoyage d'un profilé au sein de l'installation des figures 1 et 2, au cours de laquelle le front avant du profilé commence à se décoller de la surface de convoyage pour contourner le rouleau de décollement.

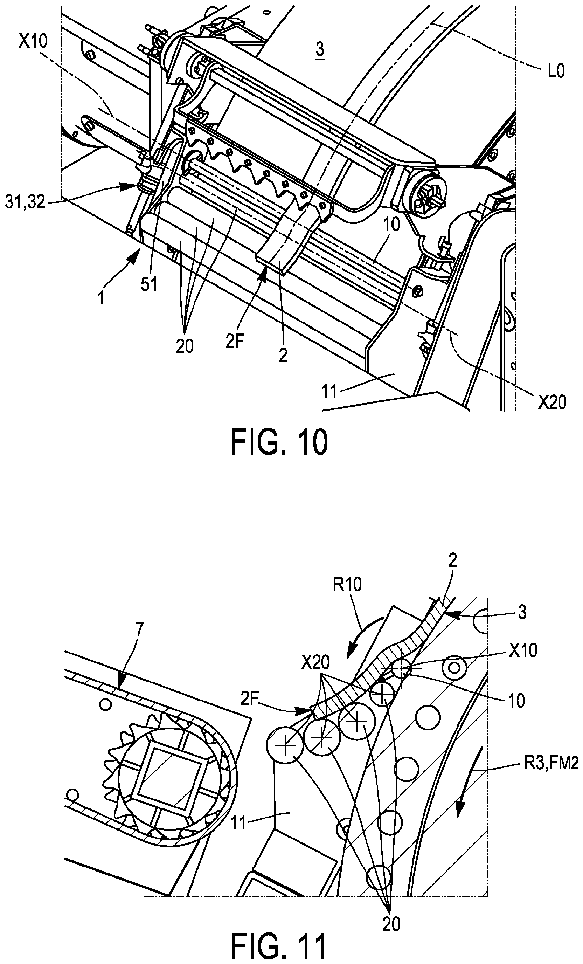

Les figures 10 et 11 illustrent, respectivement selon des vues en perspective et en coupe de côté, une quatrième phase de convoyage d'un profilé au sein de l'installation des figures 1 et 2, au cours de laquelle le front avant du profilé poursuit le contournement du rouleau de décollement et est guidé, en aval du rouleau de décollement, par une succession de rouleaux d'accompagnement.

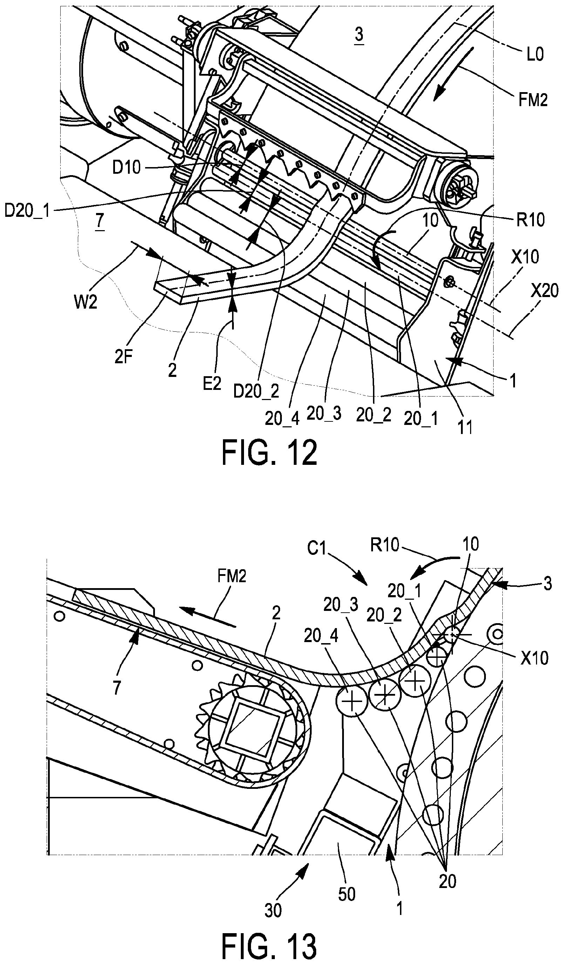

Les figures 12 et 13 illustrent, respectivement selon des vues en perspective et en coupe de côté, une cinquième phase de convoyage d'un profilé au sein de l'installation des figures 1 et 2, au cours de laquelle le front avant du profilé atteint une surface réceptrice de destination, ici un tapis de convoyeur, qui est située à distance de la surface de convoyage, en aval du dispositif de séparation.

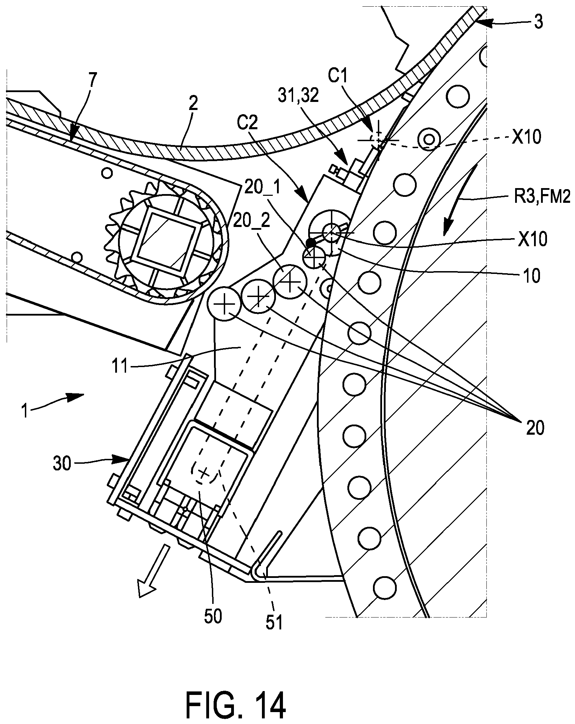

La figure 14 illustre, selon une vue en coupe de côté, une possible sixième phase de convoyage du profilé au cours de laquelle on se trouve en régime établi de production, et le support du rouleau de décollement est placé en retrait, dans une configuration de dégagement, afin de ne plus interférer avec le profilé qui est soutenu par la surface de convoyage en amont, et par la surface réceptrice en aval.

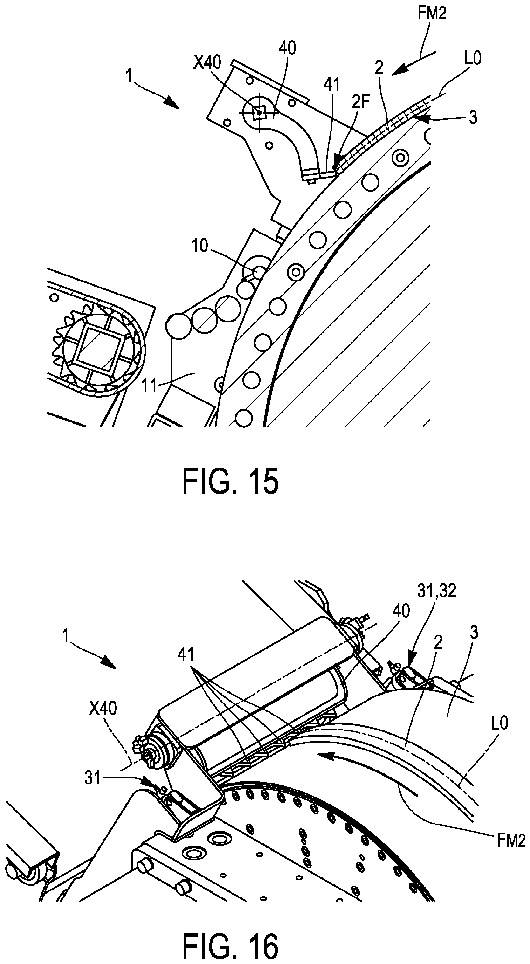

La figure 15 illustre, selon une vue en coupe de côté, une variante de dispositif de séparation selon l'invention qui met en oeuvre, pour faciliter le décollement du profilé, une herse basculante qui présente une rangée de dents contre lesquelles vient se piquer le front avant du profilé.
La figure 16 est une vue de détail en perspective de l'agencement des dents de la herse de la figure 15.

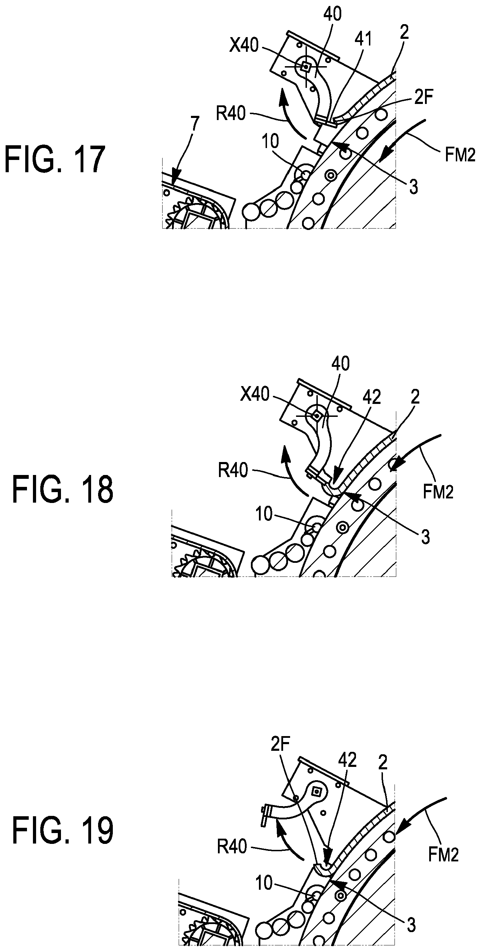

Les figures 17, 18, 19, 20, 21 et 22 illustrent, selon des vues en coupe de côté, les phases successives de la mise en oeuvre de la herse au début d'un cycle de production, où le basculement de la herse permet de décoller le front avant du profilé de la surface de convoyage et de conférer audit front avant, par déformation plastique, une forme redressée qui facilite tout d'abord l'engagement dudit front avant de profilé sur le rouleau de décollement puis le cheminement du profilé à travers le dispositif de séparation.

La présente invention concerne un dispositif 1 de séparation destiné à séparer un profilé 2 d'une surface de convoyage 3 qui convoie ledit profilé 2 selon une direction longitudinale L0.

Ladite direction longitudinale L0 correspond en pratique à la ligne moyenne selon laquelle ledit profilé 2 s'étend dans le sens de sa longueur.

Le profilé 2 est acheminé le long de ladite direction longitudinale L0 selon un mouvement d'avance FM2.

L'extrémité libre du profilé qui se présente en tête dudit profilé 2 dans le sens du mouvement d'avance FM2 est dite « front avant » 2F dudit profilé 2.

De préférence, ledit profilé 2 est réalisé dans un matériau à base de caoutchouc non vulcanisé.

Ledit profilé 2 est de préférence destiné à entrer dans la fabrication d'un bandage pour véhicule, plus particulièrement d'un bandage pneumatique.

Ledit profilé 2 est, de façon particulièrement préférentielle, destiné à former la bande de roulement d'un tel bandage.

De préférence, le profilé 2 est obtenu par extrusion, sous forme d'une bande continue issue de, et conformée par, une filière 4, qui génère ledit profilé en longueur selon la direction longitudinale L0.

A ce titre, l'invention porte également sur une installation d'extrusion 5 en tant que telle, ladite installation d'extrusion 5 comprenant, tel que cela est notamment visible sur les figures 1 et 2, une filière 4 qui permet de produire en continu un profilé 2 par extrusion, une surface de convoyage 3 qui reçoit le profilé 2 en aval de ladite filière 4 et qui achemine ledit profilé 2 jusqu'à une distance prédéterminée de la filière 4, ladite installation 5 comprenant en outre un dispositif de séparation 1 selon l'invention, lequel dispositif 1 de séparation est agencé pour venir prélever le profilé 2 sur ladite surface de convoyage 3 lorsque ledit profilé 2 atteint la distance prédéterminée.

De préférence, la surface de convoyage 3 est formée par un rouleau 3, dit « rouleau principal » 3. Ledit rouleau principal 3 présente une forme de révolution, de préférence cylindrique de base circulaire, autour d'un axe principal X3.

Par commodité de description et de numérotation, on pourra assimiler surface de convoyage 3 et rouleau principal 3 dans ce qui suit.

Le rouleau principal 3 est monté en rotation R3 autour dudit axe principal X3.

Le rouleau principal 3, et plus généralement la surface de convoyage 3, est de préférence entraîné en rotation par un moteur 6, de préférence un moteur électrique, piloté par une unité de commande, telle qu'une unité de commande électronique.

De préférence l'axe principal X3 est horizontal.

A titre indicatif, le rouleau principal 3 pourra de préférence présenter un diamètre compris entre 15 cm et 300 cm.

La distance prédéterminée que le profilé 2 parcourra au contact de ladite surface de convoyage 3, depuis la filière 4 jusqu'au dispositif de séparation 1, sera de préférence choisie suffisamment longue pour assurer un maintien sûr du profilé 2 sur ladite surface de convoyage 3, un entraînement efficace dudit profilé 2 par la surface de convoyage 3, et une bonne stabilisation dimensionnelle du profilé 2 par refroidissement sur ladite surface de convoyage 3.

A titre indicatif, et notamment lorsque le rouleau principal 3 présente un grand diamètre, par exemple compris entre 90 cm et 300 cm, cette distance prédéterminée pourra être égale ou supérieure à 40 cm, voire supérieure à 50 cm, ou même supérieure à 70 cm, et par exemple comprise entre 50 cm et 500 cm.

Lorsque la surface de convoyage 3 est formée par un rouleau principal 3, ladite distance prédéterminée entre la filière 4 et le dispositif de séparation 1 correspond de préférence à un secteur angulaire compris entre 20 degrés et 270 degrés, et par exemple entre 180 degrés (soit un demi-tour) et 270 degrés (soient trois-quarts de tour) en azimut autour de l'axe principal X3, tel que cela est notamment visible sur la figure 1.

De préférence, le profilé 2 adhère à la surface de convoyage 3, par exemple sous l'effet du collant naturel (« tack », en anglais) du matériau constitutif du profilé, comme c'est le cas avec un matériau à base de caoutchouc cru.

En variante, et notamment en fonction de la nature du profilé 2, cette adhésion pourrait être assurée sous l'effet d'un système de retenue associé à la surface de convoyage 3, tel qu'un système d'aspiration (de type ventouse) ou un système d'aimant (si le profilé est sensible à l'aimantation).

De façon connue en soi, la filière 4 est de préférence alimentée en un ou plusieurs matériaux, ici plus particulièrement des matériaux à base de caoutchouc cru, qui sont issus d'une ou plusieurs extrudeuses, telles que des extrudeuses à vis comprenant un fourreau dans lequel une vis est montée en rotation autour de son axe longitudinal pour malaxer, chauffer, et mettre sous pression le matériau concerné.

L'installation 5 comprend par ailleurs de préférence une surface réceptrice 7, qui est distincte et distante de la surface de convoyage 3, et positionnée en aval du dispositif de séparation 1 dans le sens de progression du profilé 2, c'est-à-dire dans le sens du mouvement d'avance FM2, de sorte à pouvoir accueillir le profilé 2 en sortie du dispositif de séparation 1, et le cas échéant de sorte à pouvoir acheminer ledit profilé 2 vers un autre poste, tel qu'un poste de coupe qui permettra de prélever dans ledit profilé 2 des tronçons de profilé de longueur prédéterminée.

De préférence, ladite surface réceptrice 7 peut être formée par un convoyeur à bande et/ou à rouleaux, tel que cela est visible sur les figures 1 et 2.

Par ailleurs, la surface de convoyage 3 est de façon particulièrement préférentielle formée par un rouleau principal 3 qui définit, avec la filière 4, un entrefer 8 qui détermine l'épaisseur E2 du profilé 2.

En d'autres termes, l'installation 5 forme de préférence une extrudeuse à rouleau, qui permet notamment un bon contrôle de la géométrie et de la régularité du profilé 2.

L'épaisseur E2 du profilé est ici considérée selon la direction normale à la surface de convoyage 3 au point considéré, et donc en particulier de façon radiale par rapport à l'axe principal X3.

A titre indicatif, l'épaisseur E2 du profilé, en l'espèce l'épaisseur E2 nominale dudit profilé 2 que l'on souhaite conférer audit profilé 2, et qui doit donc correspondre à l'épaisseur selon laquelle le profilé 2 est généré lorsque l'installation 5 fonctionne en régime établi, pourra être comprise entre 2 mm et 100 mm, et par exemple comprise entre 5 mm et 25 mm, par exemple égale à 10 mm ou 12 mm.

Selon l'invention, le dispositif 1 de séparation comprend un rouleau de décollement 10 qui est destiné à s'interposer entre le profilé 2 et la surface de convoyage 3 pour provoquer le décollement du profilé 2 de ladite surface de convoyage 3.

A cet effet, ledit rouleau de décollement 10 est monté rotatif sur un support 11, autour d'un axe dit « axe de décollement » X10.

Le rouleau de décollement 10 présente une forme de révolution, préférentiellement une forme cylindrique de base circulaire, centrée sur l'axe de décollement X10.

Le support 11 et le rouleau de décollement 10 sont agencés pour pouvoir adopter une configuration dite «configuration d'engagement » C1, selon laquelle l'axe de décollement X10 est orienté transversalement, de préférence perpendiculairement, à la direction longitudinale L0 et parallèlement à la surface de convoyage 3.

Ainsi, le rouleau de décollement 10 est avantageusement placé, à la manière d'une barrière, en travers du chemin que suit le profilé 2 lorsque ledit profilé repose sur la surface de convoyage 3 et est entraîné dans le mouvement d'avance FM2, mouvement d'avance FM2 qui est de préférence généré par la surface de convoyage 3, et qui coïncide donc de préférence avec la rotation R3 du rouleau principal 3.

Un tel agencement du rouleau de décollement 10 permet au front avant 2F dudit profilé 2 d'aborder ledit rouleau de décollement 10 par le côté dudit rouleau de décollement, sensiblement voire exactement perpendiculairement à l'axe de décollement X10, et de venir en appui contre la surface incurvée convexe dudit rouleau de décollement 10, tel que cela est notamment visibles sur les figures 3, 6 et 7.

De préférence, l'axe de décollement X10 est parallèle à l'axe principal X3.

Le support 1 1 et le rouleau de décollement 10 sont en outre agencés de telle manière que, en configuration d'engagement C1, tel que cela est illustré sur la figure 3, l'axe de décollement X10 est situé à une distance H10 de la surface de convoyage 3 qui est telle que d'une part un interstice 12 subsiste entre ledit rouleau de décollement 10 et la surface de convoyage 3, que d'autre part le rouleau de décollement 10 forme une butée qui s'oppose à la progression du front avant 2F du profilé sur la surface de convoyage 3 et empêche ledit front avant 2F de franchir l'interstice 12, et que, enfin, l'on puisse générer une rotation R10 du rouleau de décollement 10 autour de l'axe de décollement X10, dite «rotation de décollement » R10, qui contraint, ou à tout le moins incite, le front avant 2F du profilé, et plus globalement le profilé 2, à se décoller de la surface de convoyage 3 pour que le profilé 2 puisse poursuivre son mouvement d'avance FM2 en contournant et franchissant le rouleau de décollement 10 à l'opposé de l'interstice 12, en suivant ladite rotation de décollement R10.

Ainsi, en configuration d'engagement C1, le rouleau de décollement 10 permet tout d'abord de bloquer, de façon très temporaire, la progression du profilé 2 le long de la surface de convoyage 3 lorsque ledit profilé 2 atteint et entre en contact avec ledit rouleau de décollement 10, juste le temps nécessaire pour que la rotation de décollement R10 éloigne le profilé de l'interstice en renvoyant le profilé 2 du côté opposé à ladite surface de convoyage 3 et à l'interstice 12, par rapport à l'axe de décollement X10, pour permettre audit profilé 2, ainsi détaché et écarté de la surface de convoyage 3, de poursuivre son mouvement d'avance FM2.

Le décollement du profilé 2, et plus particulièrement le décollement du front avant 2F par lequel débute le passage dudit profilé 2, est ainsi avantageusement réalisé de manière automatique, sans nécessiter d'intervention manuelle d'un opérateur, et sans risque d'endommager le profilé 2 ou de causer un bourrage.

Avantageusement, la présence de l'interstice 12 permet au rouleau de décollement 10 de ne pas toucher la surface de convoyage 3, et donc de conserver une rotation R10 indépendante, dont le sens peut se conformer au sens du mouvement d'avance FM2 du profilé 2, sans que ledit sens de rotation ne soit contrarié par le mouvement propre, ici la rotation R3, de la surface de convoyage 3. En particulier, cela évite que le mouvement de la surface de convoyage 3 n'induise une rotation du rouleau de décollement 10 qui tendrait à laminer le profilé 2 entre ledit rouleau de décollement 10 et la surface de convoyage 3. Bien au contraire, on observe ici que la rotation R10 du rouleau de décollement 10, induite lors du passage du profilé 2, et la rotation R3 de la surface de convoyage sont de même sens, ici de sens anti-horaire sur les figures 9 et 11, pour favoriser le pelage du profilé 2.

La hauteur H12 de l'interstice 12, qui correspond à la plus petite distance qui sépare la surface de convoyage 3 de la paroi cylindrique du rouleau de décollement 10, et qui est donc mesurée ici selon une droite fictive perpendiculaire à la fois à la surface externe du rouleau de décollement 10 et à la surface de convoyage 3, et donc radialement à l'axe de décollement X10 et, le cas échéant, radialement à l'axe principal X3, possède donc une valeur non nulle, c'est-à-dire strictement supérieure à zéro millimètre, de préférence égale ou supérieure à 0,5 mm, voire égale ou supérieure à 1 mm.

Bien entendu, la hauteur H12 de l'interstice 12 sera strictement inférieure à l'épaisseur E2 du profilé, de préférence égale ou inférieure à 50 % (la moitié) de l'épaisseur E2 du profilé, voire égale ou inférieure à 30 % de l'épaisseur du profilé E2, de sorte à empêcher le profilé 2 de s'engager de force à travers l'interstice 12, entre le rouleau de décollement 10 et la surface de convoyage 3, et donc de sorte à éviter tout bourrage.

A titre indicatif, la hauteur de l'interstice H12 pourra en définitive être comprise entre 0,5 mm et la moitié de l'épaisseur E2 nominale du profilé 2.

Par ailleurs, la proximité du rouleau de décollement 10 par rapport à la surface de convoyage 3, qui résulte de la faible distance H10, dite « hauteur d'axe de décollement H10 », qui est imposée entre l'axe de décollement X10 et la surface de convoyage 3, permet avantageusement de favoriser le franchissement du rouleau de décollement 10 par le front avant 2F du profilé, selon une trajectoire qui permet audit profilé 2 de se soulever et de passer par-dessus ledit rouleau de décollement 10, sous l'action conjointe du rouleau de décollement 10 et de la poussée générée par le mouvement d'avance FM2, tel que cela est notamment illustré sur les figures 3 et 9.

Ceci revient en quelque sorte à insérer frontalement, à la manière d'un coin, le rouleau de décollement 10 entre le front avant 2F du profilé et la surface de convoyage 3. On notera ceci étant que, à la différence d'un coin prismatique qui génère un frottement, le rouleau de décollement 10 accompagne ici par roulement, par sa simple mise en rotation R10, la progression du profilé 2.

Ainsi le profilé 2 peut être séparé sans effort et sans dommage de la surface de convoyage 3, et s'éloigner de ladite surface de convoyage 3 à partir du point de bifurcation que constitue le rouleau de décollement 10, pour rejoindre ensuite la surface réceptrice 7.

Selon une possibilité préférentielle, en configuration d'engagement C1, la distance H10 entre l'axe de décollement 10 et la surface de convoyage 3 est égale ou inférieure à l'épaisseur E2 (nominale) du profilé 2.

Cette hauteur d'axe de décollement H10 peut même préférentiellement être égale ou inférieure à 0,8 fois l'épaisseur E2 du profilé, égale ou inférieure à 0,7 fois l'épaisseur E2 du profilé, ou même égale ou inférieure à 0,5 fois l'épaisseur E2 du profilé.

Ceci favorise notamment l'effet de pénétration du rouleau de décollement 10 entre le profilé 2 et la surface de convoyage 3.

De même, le diamètre D10 du rouleau de décollement 10 sera de préférence relativement fin, de manière à faciliter l'insertion et la pénétration dudit rouleau de décollement 10 entre le profilé 2 et la surface de convoyage 3, mais néanmoins suffisamment fort pour éviter une flexion excessive sous la charge du profilé 2.

La valeur du diamètre D10 du rouleau de décollement sera de préférence inférieure à deux fois la valeur de l'épaisseur E2 (nominale) du profilé.

A titre indicatif, le diamètre D10 du rouleau de décollement pourra être ainsi compris entre 2 mm (typiquement pour un profilé d'épaisseur 1 mm à 2 mm) et 200 mm (typiquement pour un profilé d'une épaisseur de l'ordre de 100 mm).

De préférence, le diamètre D10 du rouleau de décollement 10 sera par ailleurs strictement inférieur au diamètre du rouleau principal 3.

Par ailleurs, la longueur axiale du rouleau de décollement 10, mesurée le long de l'axe de décollement X10, et notée W10, est avantageusement supérieure à la largeur W2 du profilé 2. De préférence, ladite longueur axiale W10 du rouleau de décollement 10 sera sensiblement égale à la largeur W3 de la surface de convoyage 3, par exemple comprise entre 80 % et 120 % de ladite largeur W3, et plus préférentiellement égale à ladite largeur W3 de la surface de convoyage 3.

La prise en charge du profilé 2 par ledit rouleau de décollement 10 sera ainsi bien répartie sur toute la largeur du profilé 2, sans risque de déformation ou de déchirement du profilé 2.

L'installation 5 comprend par ailleurs un bâti 13 qui porte la surface de convoyage 3, et par rapport auquel ladite surface de convoyage 3 est animée du mouvement d'avance FM2, ici de préférence par la rotation R3 autour de l'axe principal X3.

Le support 11 du dispositif de séparation 1 est avantageusement agencé pour coopérer avec ledit bâti 13 de manière à pouvoir placer et maintenir en configuration d'engagement C1 le rouleau de décollement 10, et plus particulièrement l'axe de décollement X10, dans une position nominale prédéterminée par rapport au bâti 13, qui remplit les conditions de hauteur H12 d'interstice 12 et de hauteur H10 d'axe de décollement X10 indiquées plus haut, et à retenir ledit axe de décollement 10 dans ladite position nominale prédéterminée ou dans le voisinage immédiat de ladite position nominale prédéterminée, à l'encontre des efforts générés par le mouvement d'avance FM2 du profilé 2 et de la surface de convoyage 3.

Ainsi, la position de l'axe de décollement X10 par rapport au bâti 13 reste fixe, ou sensiblement fixe, pendant le décollement du profilé 2, de sorte que l'axe de décollement X10 résiste aux efforts générés contre le rouleau de décollement 10 par le profilé 2, sous la poussée de la surface de convoyage 3, dans une mesure suffisante pour provoquer la pénétration du rouleau de décollement 10 entre la face inférieure du profilé 2 et la surface de convoyage 3, et donc le décollement dudit profilé 2.

De préférence, tel que cela est bien visible par exemple sur les figures 1, 2, 4 et 10, le dispositif de séparation 1 comprend une pluralité de rouleaux auxiliaires 20 qui sont montés rotatifs sur le support 11, et disposés à la suite les uns des autres et à la suite du rouleau de décollement 10, parallèlement audit rouleau de décollement 10, afin d'accompagner le profilé 2 lorsque ce dernier a franchi le rouleau de décollement 10.

Lesdits rouleaux auxiliaires 20 sont avantageusement disposés en enfilade, avec leurs axes de rotation X20 respectifs disposés parallèlement entre eux et parallèlement à l'axe de décollement X10, pour former une sorte de tapis de rouleaux auxiliaires 20 qui guide le profilé 2 selon une trajectoire bien déterminée jusqu'à l'entrée de la surface réceptrice 7.

Lesdits rouleaux auxiliaires 20 sont espacés les uns des autres par des intervalles dont la taille est strictement inférieure à l'épaisseur du profilé E2.

La présence des intervalles permet avantageusement aux rouleaux auxiliaires 20 de se mettre chacun en rotation indépendamment des autres rouleaux auxiliaires 20, et indépendamment du rouleau de décollement 10, sans interférence.

En outre, la relative étroitesse desdits intervalles permet avantageusement d'éviter que le profilé 2 ne s'insinue accidentellement entre deux rouleaux auxiliaires 20 successifs. On est donc assuré de maintenir ledit profilé 2 sur le tapis de rouleaux auxiliaires 20, au fur et à mesure que le front avant du profilé 2F, poursuivant son mouvement d'avance FM2 au-delà du rouleau de décollement 10, s'engage sur lesdits rouleaux auxiliaire 20, l'un après l'autre.

De préférence, les rouleaux auxiliaires 20 accompagnent le profilé 2 selon une trajectoire courbe qui dévie de la surface de convoyage 3, et plus particulièrement selon une trajectoire qui présente à cet effet une courbure qui est de signe contraire à la courbure de la surface de convoyage 3.

Ainsi, le guidage offert par le dispositif de séparation 1 permet au profilé de diverger de manière progressive et douce de la surface de convoyage 3 pour rejoindre la surface réceptrice 7.

A cet effet, les axes de rotation des rouleaux auxiliaires 20 seront avantageusement distribués sur le support 11 selon une ligne courbe qui correspond à la trajectoire courbe souhaitée.

De préférence, les rouleaux auxiliaires 20 présentent des diamètres supérieurs au diamètre D10 du rouleau de décollement 10.

Ainsi, le rouleau de décollement 10 forme une sorte de pointe relativement fine, ce qui facilite une approche précise de la surface de convoyage 3 et une pénétration entre le profilé 2 et la surface de convoyage 3.

A l'inverse, en choisissant pour les rouleaux auxiliaires 20 un diamètre plus grand, on peut limiter le nombre de rouleaux auxiliaires 20 nécessaires au guidage du profilé 2 jusqu'à la surface réceptrice 7, puisque chaque rouleau auxiliaire 20 couvre une portion de la trajectoire plus longue que la portion couverte par le rouleau de décollement 10.

Selon une possibilité de réalisation, tous les rouleaux auxiliaires 20 pourront présenter le même diamètre.

Selon une autre possibilité de réalisation, les rouleaux auxiliaires 20 pourraient présenter des diamètres croissants, au fur et à mesure que l'on se dirige vers l'aval.

En particulier, tel que cela est visible sur les figures 12 et 14, on pourra faire en sorte que, d'amont en aval, un premier rouleau auxiliaire 20_1, qui suit immédiatement le rouleau de décollement 10, présente un diamètre D20_1 supérieur au diamètre D10 du rouleau de décollement 10, et qu'un second rouleau auxiliaire 20_2 qui suit immédiatement le premier rouleau auxiliaire 20_1 présente un diamètre D20_2 supérieur à celui D20_1 dudit premier rouleau auxiliaire 20_1.

Les rouleaux auxiliaires suivants 20_3, 20_4, ici les deux rouleaux auxiliaires suivants, pourront présenter un diamètre égal à celui D20_2 du second rouleau auxiliaire 20_2.

Par ailleurs, la longueur axiale de chaque rouleau auxiliaire 20, notée W20 et mesurée le long de son axe de rotation X20, sera de préférence égale d'un rouleau auxiliaire 20 à l'autre, et de préférence sensiblement égale à la longueur W10 du rouleau de décollement, et par exemple comprise entre 80% et 120% de la largeur W3 de la surface de convoyage 3, voire égale à ladite largeur W3 de la surface de convoyage 3.

Ici encore, ceci assurera une largeur suffisante, de préférence sensiblement constante, du chemin de rouleaux 3, 10, 20 suivi par le profilé 2, et donc une prise en charge homogène du profilé 2, sans risque d'altération dudit profilé 2 ou de bourrage.

De préférence, les rouleaux auxiliaires 20 sont montés en libre rotation sur le support.

Ainsi, les rouleaux auxiliaires 20 forment avantageusement un tapis de rouleaux fous, particulièrement compact et léger, qui n'oppose quasiment aucune résistance à la progression du profilé 2 selon le mouvement d'avance FM2, dès lors que le front avant du profilé 2F a surmonté et dépassé le rouleau de décollement 10.

De préférence, le rouleau de décollement 10 et les rouleaux auxiliaires 20 sont nus et indépendants les uns des autres, en ceci qu'ils ne sont pas recouverts par une courroie ou une bande commune qui entourerait lesdits rouleaux 10, 20 et solidariserait leurs rotations respectives. Avantageusement, l'utilisation de rouleaux nus, non recouverts d'une surépaisseur de courroie, permet de conserver des rouleaux 10, 20, notamment un rouleau de décollement 10, de diamètre particulièrement fin, et d'éviter tout risque d'interférence ou de friction entre ledit rouleau de décollement 10, et plus globalement le dispositif de séparation 1, et la surface de convoyage 3, même lorsque le dispositif de séparation est proche de la surface de convoyage 3 et que l'interstice 12 est relativement étroit.

De préférence, tel que cela est notamment visible sur la figure 14, le dispositif 1 de séparation comprend un moteur de décollement 50 qui est agencé pour générer la rotation de décollement R10 selon laquelle on entraîne le rouleau de décollement 10 par rapport au support 11.

Avantageusement, un tel moteur de décollement 50 permet de générer une rotation de décollement R10 active, de préférence avant même que le front avant 2F du profilé n'atteigne le rouleau de décollement 10, ce qui permet de dévier activement le front avant 2F du profilé dans la bonne direction, à l'opposé de l'interstice 12, sitôt que le contact s'établit entre le profilé 2 et le rouleau de décollement 10.

On favorise ainsi le pelage, notamment lorsque le front avant 2F du profilé présente une faible épaisseur, et en particulier dans les cas où l'épaisseur E2 du profilé ne dépasse pas la hauteur d'axe de décollement H10, ou ne dépasse pas la hauteur totale du rouleau de décollement 10 par rapport à la surface de convoyage 3.

Le moteur de décollement 50 pourra entraîner le rouleau de décollement 10 par tout organe de transmission de mouvement approprié, par exemple au moyen d'une courroie 51, tel que cela est visible sur les figures 6, 8, 10 et 14.

Le moteur de décollement 50 pourra avantageusement être logé entre les deux branches latérales du support 11, dans l'espace disponible situé en-dessous des rouleaux auxiliaires 20, entre le rouleau principal 3 et la surface réceptrice aval 7.

De préférence, le dispositif 1 de séparation comprend un sélecteur qui permet de sélectionner entre d'une part un mode de décollement actif, selon lequel le moteur de décollement 50 est activé de sorte à entraîner activement le rouleau de décollement 10 dans la rotation de décollement R10 par rapport au support 11, et d'autre part un mode de décollement passif, dans lequel ledit moteur de décollement 50 est désactivé et/ou déconnecté du rouleau de décollement 10 (par exemple au moyen d'un système de débrayage) de sorte à laisser le rouleau de décollement 10 en rotation libre.

Le mode de décollement actif sera notamment privilégié lorsque le profilé 2 présente une faible épaisseur E2 par rapport au diamètre D10 du rouleau de décollement et/ou par rapport à la hauteur d'axe de décollement H10.

A l'inverse, on pourra privilégier le mode de décollement passif lorsque la production atteint un régime établi qui permet à la surface réceptrice aval 7 de contribuer au pelage, ou bien encore lorsque le profilé 2, et plus particulièrement son front avant 2F, présente une épaisseur E2 très supérieure à la hauteur d'axe de décollement H10, et/ou un collant relativement faible, ce qui favorise un décollement naturel du profilé 2 par le rouleau de décollement 10, en simple réaction à la poussée exercée par le mouvement d'avance FM2. Dans ce mode passif, le rouleau de décollement 10 est fou, non motorisé, de sorte à être entraîné naturellement en rotation R10 de façon passive, sans opposer de résistance, sous l'effet du mouvement d'avance FM2 du profilé 2 qui engrène sur la surface dudit rouleau de décollement 10.

De préférence, la rotation de décollement R10 est telle que la norme de la vitesse tangentielle de la surface du rouleau de décollement 10, au point où le profilé 2 entre en contact avec ladite surface du rouleau de décollement 10, est égale à la norme de la vitesse tangentielle de la surface de convoyage 3, dans la direction longitudinale L0, au point où ledit profilé 2 se sépare de ladite surface de convoyage 3.

Ainsi, il n'y aura pas de discontinuité de vitesse, et donc pas de heurt ni d'endommagement du profilé (par tassement ou au contraire par élongation), lorsque le profilé 2 quittera la surface de convoyage 3 pour passer sur la surface du rouleau de décollement 10.

En mode de décollement passif, le rouleau de décollement 10 étant en libre rotation, cette continuité de vitesse se créera naturellement.

En mode de décollement actif, la continuité de vitesse sera assurée par l'unité de commande, qui asservira en conséquence le moteur de décollement 50, et donc la rotation de décollement R10, en fonction de la vitesse de la surface de convoyage 3, ici plus particulièrement en fonction de la vitesse de rotation R3 du rouleau principal 3.

Le moteur de décollement 50 peut être piloté, et notamment synchronisé avec le moteur 6 qui entraîne la surface de convoyage 3, au moyen de la même unité de commande électronique que celle qui pilote le moteur 6 de la surface de convoyage 3.

De préférence, tel que cela est visible notamment sur les figures 1, 4 et 15, le support 11 est porté par un mécanisme de positionnement 30 qui permet d'ajuster la distance du support 11, et par conséquent de l'axe de décollement X10, par rapport à la surface de convoyage 3.

Le chariot 11, et donc l'axe de décollement X10 peut ainsi être alternativement rapproché ou éloigné de la surface de convoyage 3, sur commande de l'unité de commande.

Le mécanisme de positionnement 30 pourra notamment permettre d'adapter la hauteur H10 d'axe de décollement en fonction de l'épaisseur E2 du profilé 2 à produire.

De manière alternative ou complémentaire, le mécanisme de positionnement 30 pourra permettre d'escamoter le support 11 et le rouleau de décollement 10 en retrait de la trajectoire suivie par le profilé 2, soit parce qu'il n'est plus utile d'assister le profilé 2 pour lui permettre de se décoller de la surface de convoyage 3, soit parce qu'il est nécessaire d'accéder à l'intérieur de l'installation 5, et notamment à la surface de convoyage 3, pour une opération de nettoyage ou de maintenance.

Ainsi, de préférence, le mécanisme de positionnement 30 permettra de placer sélectivement le support 11, et le rouleau de décollement 10, soit dans la configuration d'engagement C1 mentionnée plus haut, par exemple une configuration d'engagement dans laquelle la distance H10 entre l'axe de décollement X10 et la surface de convoyage 3 est inférieure à l'épaisseur E2 du profilé 2, de sorte que le rouleau de décollement 10 puisse coopérer avec le profilé 2 pour séparer ledit profilé 2 de la surface de convoyage 3, tel que cela est représenté sur les figures 1, 5, 7, 9, 11, 13, et en pointillés sur la figure 14, soit dans une configuration de dégagement C2 dans laquelle, tel que cela est illustré sur la figure 14, une fois que le profilé 2 est engagé sur une surface réceptrice 7 distincte de la surface de convoyage 3 et située à distance de ladite surface de convoyage 3 en aval du dispositif de séparation 1, ledit dispositif de séparation 1, et en particulier le rouleau de décollement 10, est dégagé dudit profilé 2, de sorte à ne plus toucher ledit profilé 2.

La configuration de dégagement C2 permettra ainsi de placer le rouleau de décollement 10, et plus globalement le dispositif de séparation 1, en retrait de la trajectoire suivie par le profilé 2, dans une position où ledit dispositif de séparation 1 n'interagit plus, et n'interfère plus, avec la progression du profilé 2, ni avec le mouvement de la surface de convoyage 3.

De préférence, la configuration d'engagement C1 est utilisée en début de production du profilé 2, lorsqu'il est nécessaire d'intervenir activement pour décoller et dévier le front avant 2F du profilé 2 afin d'amener ledit profilé 2 jusque sur la surface réceptrice 7.

La configuration de dégagement C2 est quant à elle de préférence mise en oeuvre une fois que l'on a atteint le régime établi de production, et que le profilé 2 s'étend en continu de la surface de convoyage 3 à la surface réceptrice 7, de sorte à être suffisamment soutenu par ces deux surfaces 3, 7 pour que l'action de traction longitudinale exercée par la surface réceptrice 7, elle-même mobile et entraînée vers l'aval par un moteur idoine, suffise à assurer le pelage du profilé 2 en amont, au niveau de la surface de convoyage 3.

Le mécanisme de positionnement 30 peut par exemple comporter un rail de guidage, de préférence rectiligne, monté sur le bâti 13, et qui guide le support 11 en translation, à la manière d'un chariot.

Le rail de guidage, et donc la trajectoire empruntée par le support 11 et le rouleau de décollement 10 pour gagner leur position d'engagement C1, sont de préférence orientés sensiblement selon, ou parallèlement à, la droite fictive qui est tangente à la surface de convoyage 3, ici tangente au rouleau principal 3, au point où l'on souhaite opérer la séparation entre le profilé 2 et ladite surface de convoyage 3.

Le support 11 pourra être entraîné le long du rail par tout système d'entraînement approprié, par exemple par un vérin 31, notamment un vérin pneumatique.

Plus particulièrement, tel que cela est visible sur les figures 4, 6, 8, le mécanisme de positionnement 30 pourra comprendre deux vérins 31, qui sont disposés de part et d'autre du rouleau de décollement 10 et des rouleaux auxiliaires 20, le long des branches latérales du support 11, qui sont orientées sensiblement normalement à l'axe de décollement X10, et de préférence sensiblement parallèlement à la direction de la tangente à la direction longitudinale L0 au point où le profilé 2 se décolle de la surface de convoyage 3.

Selon une caractéristique préférentielle, le mécanisme de positionnement 30 présente un organe amortisseur 32 qui permet au support 11, et plus particulièrement au rouleau de décollement 10, lorsque ledit rouleau de décollement 10 se trouve en configuration d'engagement C1, de reculer élastiquement sous la poussée du profilé 2.

De préférence, le dispositif de séparation 1 comprend alors un système de surveillance qui est capable de détecter si le mouvement de recul du support 11 dépasse un seuil prédéterminé.

Avantageusement, ledit seuil sera fixé pour correspondre typiquement à une situation de bourrage, dans laquelle le profilé 2 n'a pas été en mesure de surmonter le rouleau de décollement 10 comme prévu, et exerce donc une pression, supérieure à une valeur prédéterminée, sur ledit rouleau de décollement 10.

De préférence, le mécanisme de positionnement 30 est orienté de manière à ce que la pression exercée par le profilé 2 sur le rouleau de décollement 10, notamment dans une situation de bourrage, soit orientée sensiblement dans une direction qui tend à repousser le support 11 et le rouleau de décollement 10 à l'encontre du vérin 31, vers la position qu'ils occupent en configuration de dégagement C2.

De préférence, en cas de détection d'un franchissement du seuil, le système de surveillance émettra une alerte et provoquera un arrêt de l'installation 5, par sécurité.

De façon préférentielle, le mécanisme de positionnement 30 est animé par un vérin pneumatique 31, qui forme également l'organe amortisseur 32.

A cet effet, on utilisera de préférence dans le vérin 31 une pression relativement faible, par exemple une pression absolue comprise entre 1,5 fois et 7 fois la pression atmosphérique ambiante, pour maintenir le support 11 en configuration d'engagement C1, et l'on utilisera la compressibilité de l'air contenu dans ledit vérin 31 pour obtenir l'effet élastique et la raideur recherchés pour accommoder le recul élastique du rouleau de décollement 10.

Un même mécanisme 30 peut ainsi assurer à la fois la fonction de positionnement et la fonction de suspension élastique du support 11 et de détection d'un bourrage.

En variante, l'organe amortisseur 32 pourrait être formé par un ressort, ou un ensemble ressort/amortisseur.

Par ailleurs, selon une possible de variante de réalisation, qui peut de préférence se combiner à un rouleau de décollement 10 tel que décrit ci-dessus, le dispositif de séparation 1 peut comprendre, tel que cela est visible sur les figures 15 à 22, une herse 40 basculante qui est montée en pivotement autour d'un axe dit « axe de herse » X40 qui est parallèle à la surface de convoyage 3, et transverse et de préférence perpendiculaire à la direction longitudinale L0.

Comme cela est visible sur la figure 16, ladite herse 40 présente une rangée de dents 41 qui sont, au moins initialement, dans une configuration d'attente, positionnées en vis-à-vis de la surface de convoyage 3, à une distance de ladite surface de convoyage qui est non nulle et strictement inférieure à l'épaisseur E2 du profilé.

De la sorte, lorsque le profilé 2 est soumis à un mouvement d'avance FM2 selon la direction longitudinale L0 sur, et de préférence par, la surface de convoyage 3, le front avant 2F dudit profilé vient se piquer sur les dents 41 (figure 15) et provoque un basculement R40 de la herse 40 autour de l'axe de herse X40, basculement R40 qui a pour conséquence de décoller le front de profilé 2F de la surface de convoyage 3 (figures 17 et 18).

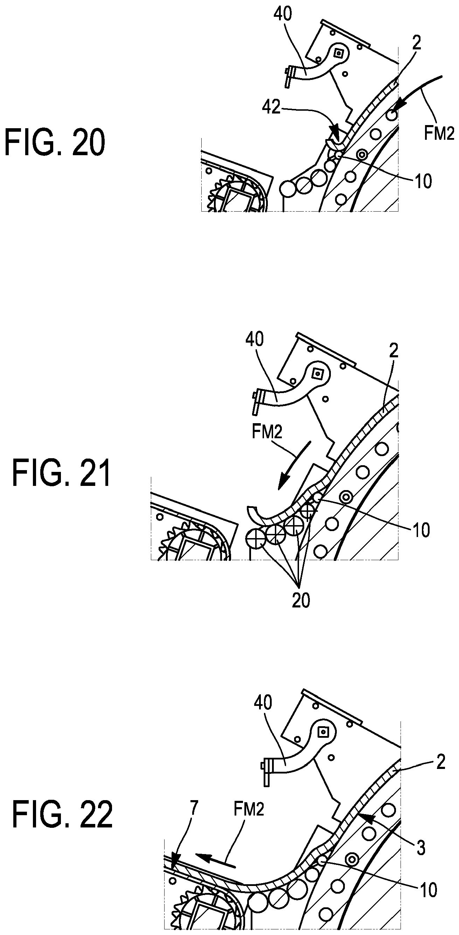

Plus particulièrement, la herse 40 pourra être positionnée en amont du rouleau de décollement 10 de sorte à pouvoir intercepter le front avant du profilé 2F qui se pique dans les dents 41 (figure 15), et à pouvoir ensuite, en amorçant son basculement R40, soulever et décoller le front de profilé 2F de la surface de convoyage 3 (figure 17), et, en combinaison avec le mouvement d'avance FM2, redresser ledit front de profilé 2F de sorte à former un coude 42 en U (figure 18) qui, lorsque le profilé 2 se détache de la herse 40 tandis que ladite herse 40 poursuit son basculement R40 et s'éloigne pour gagner une configuration de dégagement (figure 19), peut poursuivre sa progression jusqu'au rouleau de décollement 10 (figure 20), au niveau duquel la surépaisseur et l'arrondi formés par ledit coude 42 facilitent le franchissement dudit rouleau de décollement 10 ainsi que la poursuite de la progression du profilé 2 sur les rouleaux auxiliaires 20 (figure 21) puis sur la surface réceptrice 7 aval (figure 22).

On notera à ce titre que l'utilisation par le dispositif de séparation 1 d'un rouleau de décollement 10 selon l'invention, en particulier en l'absence de herse 40, permet d'exploiter, pour décoller le profilé 2, un important espace totalement dégagé qui correspond à la zone de l'espace située radialement au-delà du rouleau de décollement 10 par rapport à la surface de convoyage 3 et à l'axe principal X3. Dans la mesure où ledit espace est dégagé, et vierge d'organes mécaniques, il n'existe aucun risque de bourrage.

On notera également que, de préférence, le rouleau de décollement 10 et les rouleaux auxiliaires 20 sont situés sous le profilé 2, c'est-à-dire à une altitude inférieure à celle du profilé 2, de manière à former une sorte de berceau qui recueille naturellement, de façon très stable, ledit profilé 2 par gravité.

Par ailleurs, on notera que, selon une possibilité de mise en oeuvre préférentielle on pourra, au sein de l'installation 5, générer au niveau du front avant 2F du profilé, en amont de la position du rouleau de décollement 10 par rapport au mouvement d'avance FM2, soit un bourrelet de matière, soit un pli, soit un décollement partiel dudit front avant 2F du profilé, soit une combinaison de tels éléments, de sorte à conférer audit front avant 2F du profilé une surépaisseur par rapport à l'épaisseur E2 nominale dudit profilé 2, si bien que ledit front avant 2F du profilé présente, lorsqu'il parvient au rouleau de décollement 10, une hauteur par rapport à la surface de convoyage 3, dite « hauteur apparente », qui est supérieure à l'épaisseur E2 nominale du profilé, de sorte à faciliter le franchissement du rouleau de décollement 10 par ledit front avant 2F du profilé, dans le sens de la rotation de décollement R10.

En d'autres termes, on pourra provoquer intentionnellement une surépaisseur ou un pré-décollement du front avant 2F du profilé afin de faciliter la séparation du profilé 2 de la surface de convoyage 3 par un rouleau de décollement 10.

Le pré-décollement pourra par exemple être obtenu par une herse basculante 40 telle que décrite plus haut. Un bourrelet pourra quant à lui être formé au démarrage de l'extrusion du profilé 2, par une gestion adaptée des conditions initiales d'extrusion, et notamment par une configuration et/ou une gestion adaptée de la filière 4 et/ou de l'entrefer 8.

La hauteur apparente correspond ici à la hauteur maximale du front avant 2F du profilé, mesurée normalement à la surface de convoyage 3, ici donc radialement à la surface du rouleau principal 3, au moment où ledit front avant 2F se présente face au rouleau de décollement 10 et arrive au contact dudit rouleau de décollement.

A titre indicatif, la surépaisseur ainsi conférée au front avant 2F du profilé 2 pourra porter la hauteur apparente du profilé 2, considérée localement au niveau dudit front avant 2F, à une valeur égale ou supérieure à 1,5 fois, à 2 fois, voire à 3 fois ou même à 5 fois l'épaisseur E2 nominale du profilé 2.

On notera que l'on pourra également sélectionner le mode de rotation de décollement R10 passif, c'est-à-dire en rotation libre, ou le mode de rotation de décollement R10 actif, c'est-à-dire activement motorisé, en fonction de la hauteur apparente du front avant 2F du profilé, et en particulier en fonction du ratio de la hauteur apparente sur l'épaisseur E2 nominale du profilé, et/ou en fonction du ratio entre la hauteur apparente et le diamètre D10 du rouleau de décollement 10 ou la hauteur H10 d'axe de décollement.

## Revendications

1. Dispositif (1) de séparation destiné à séparer un profilé (2) d'une surface de convoyage (3) qui convoie ledit profilé (2) selon une direction longitudinale (L0) de sorte à acheminer le profilé (2) selon un mouvement d'avance (FM2) dans le sens duquel ledit profilé (2) se présente par une extrémité libre dite « front avant » (2F), ledit dispositif étant **caractérisé en ce qu'**il comprend un rouleau de décollement (10) qui est monté rotatif sur un support (11) autour d'un axe dit « axe de décollement » (X10), et qui est destiné à s'interposer entre le profilé (2) et la surface de convoyage (3) pour provoquer le décollement du profilé (2) de ladite surface de convoyage (3), ledit support (11) et le rouleau de décollement (10) étant agencés pour pouvoir adopter une configuration dite « configuration d'engagement » (C1) selon laquelle l'axe de décollement (X10) est orienté transversalement, de préférence perpendiculairement, à la direction longitudinale (L0) et parallèlement à la surface de convoyage (3), et selon laquelle l'axe de décollement (X10) est situé à une distance (H10) de la surface de convoyage (3) qui est telle que d'une part un interstice (12) subsiste entre ledit rouleau de décollement (10) et la surface de convoyage (3), que d'autre part le rouleau de décollement (10) forme une butée qui s'oppose à la progression du front avant (2F) du profilé sur la surface de convoyage (3) et empêche ledit front avant (2F) de franchir l'interstice (12), et que, enfin, l'on puisse générer une rotation (R10) du rouleau de décollement (10) autour de l'axe de décollement (X10), dite « rotation de décollement » (R10), qui contraint le front avant (2F) du profilé à se décoller de la surface de convoyage (3) pour que le profilé (2) puisse poursuivre son mouvement d'avance (FM2) en contournant et franchissant le rouleau de décollement (10) à l'opposé de l'interstice (12), en suivant ladite rotation de décollement (R10).

2. Dispositif selon la revendication 1 **caractérisé en ce qu'**il comprend un moteur de décollement (50) agencé pour générer la rotation de décollement (R10) selon laquelle on entraîne le rouleau de décollement (10) par rapport au support (11).

3. Dispositif selon la revendication 2 **caractérisé en ce qu'**il comprend un sélecteur permettant de sélectionner entre d'une part un mode de décollement actif, selon lequel le moteur de décollement (50) est activé de sorte à entraîner activement le rouleau de décollement (10) dans la rotation de décollement (R10) par rapport au support (11), et d'autre part un mode de décollement passif, dans lequel ledit moteur de décollement (50) est désactivé et/ou déconnecté du rouleau de décollement (10) de sorte à laisser le rouleau de décollement (10) en rotation libre.

4. Dispositif selon l'une des revendications précédentes **caractérisé en ce que** la rotation de décollement (R10) est telle que la norme de la vitesse tangentielle de la surface du rouleau de décollement (10), au point où le profilé (2) entre en contact avec ladite surface du rouleau de décollement (10), est égale à la norme de la vitesse tangentielle de la surface de convoyage (3), dans la direction longitudinale (L0), au point où ledit profilé se sépare de ladite surface de convoyage (3).

5. Dispositif selon l'une des revendications précédentes **caractérisé en ce que**, en configuration d'engagement, la distance (H10) entre l'axe de décollement (10) et la surface de convoyage (3) est égale ou inférieure à l'épaisseur (E2) du profilé, voire égale ou inférieure à 0,8 fois l'épaisseur (E2) du profilé, égale ou inférieure à 0,7 fois l'épaisseur (E2) du profilé, ou même égale ou inférieure à 0,5 fois l'épaisseur (E2) du profilé.

6. Dispositif selon l'une des revendications précédentes **caractérisé en ce qu'**il comprend une pluralité de rouleaux auxiliaires (20) qui sont montés rotatifs sur le support (11), de préférence en libre rotation sur le support (11), et disposés à la suite les uns des autres et à la suite du rouleau de décollement (10), parallèlement audit rouleau de décollement (10), et en étant espacés les uns des autres par des intervalles dont la taille est strictement inférieure à l'épaisseur (E2) du profilé, afin d'accompagner le profilé (2), lorsque ce dernier a franchi le rouleau de décollement (10), selon une trajectoire courbe qui dévie de la surface de convoyage (3).

7. Dispositif selon la revendication 6 **caractérisé en ce que** les rouleaux auxiliaires (20) présentent des diamètres supérieurs au diamètre (D10) du rouleau de décollement (10).

8. Dispositif selon l'une des revendications précédentes **caractérisé en ce que** le support (11) est porté par un mécanisme de positionnement (30) qui permet d'ajuster la distance du support (11), et par conséquent de l'axe de décollement (X10), par rapport à la surface de convoyage (3).

9. Dispositif selon la revendication 8 **caractérisé en ce que** le mécanisme de positionnement (30) permet de placer sélectivement le support (11), et le rouleau de décollement (10), soit dans la configuration d'engagement (C1), de sorte que le rouleau de décollement (10) puisse coopérer avec le profilé (2) pour séparer celui-ci de la surface de convoyage (3), soit dans une configuration de dégagement dans laquelle, une fois que le profilé (2) est engagé sur une surface réceptrice (7) distincte de la surface de convoyage (3) et située à distance de ladite surface de convoyage (3) en aval du dispositif de séparation (1), ledit dispositif de séparation (1), et en particulier le rouleau de décollement (10), est dégagé dudit profilé (2), de sorte à ne plus toucher ledit profilé (2).

10. Dispositif selon la revendication 8 ou 9 **caractérisé en ce que** le mécanisme de positionnement (30) présente un organe amortisseur (32) qui permet au support (11), et plus particulièrement au rouleau de décollement (10), de reculer élastiquement sous la poussée du profilé (2), et **en ce que** le dispositif comprend un système de surveillance qui est capable de détecter si le mouvement de recul du support (11) dépasse un seuil prédéterminé.

11. Dispositif selon la revendication 10 **caractérisé en ce que** le mécanisme de positionnement (30) est animé par un vérin pneumatique (31), qui forme également l'organe amortisseur (32).

12. Dispositif selon l'une quelconque des revendications précédentes **caractérisé en ce qu'**il comprend une herse (40) basculante qui est montée en pivotement autour d'un axe dit « axe de herse » (X40) qui est parallèle à la surface de convoyage (3), et transverse et de préférence perpendiculaire à la direction longitudinale (L0), et **en ce que** ladite herse (40) présente une rangée de dents (41) qui sont positionnées en vis-à-vis de la surface de convoyage (3), à une distance de ladite surface de convoyage (3) qui est non nulle et strictement inférieure à l'épaisseur (E2) du profilé, de sorte que, lorsque le profilé (2) est soumis au mouvement d'avance (FM2) selon la direction longitudinale (L0) sur, et de préférence par, la surface de convoyage (3), le front avant (2F) dudit profilé puisse venir se piquer sur les dents (41) et provoquer un basculement (R40) de la herse (40) autour de l'axe de herse (X40), basculement (R40) qui a pour conséquence de décoller le front avant du profilé (2F) de la surface de convoyage (3).

13. Installation d'extrusion (5) comprenant une filière (4) permettant de produire en continu un profilé (2) par extrusion, et qui comporte une surface de convoyage (3) qui reçoit le profilé (2) en aval de ladite filière et qui achemine ledit profilé (2) jusqu'à une distance prédéterminée de la filière (4), ladite installation (5) étant **caractérisée en ce qu'**elle comprend un dispositif de séparation (1) selon l'une quelconque des revendications 1 à 12, agencé pour venir prélever le profilé (2) sur ladite surface de convoyage (3) lorsque ledit profilé (2) atteint la distance prédéterminée.

14. Installation selon la revendication 13 **caractérisée en ce que** la surface de convoyage (3) est formée par un rouleau principal qui définit, avec la filière (4), un entrefer (8) qui détermine l'épaisseur (E2) du profilé (2).

15. Installation selon la revendication 13 ou 14 **caractérisée en ce que** l'on génère au niveau du front avant (2F) du profilé, en amont de la position du rouleau de décollement (10) par rapport au mouvement d'avance (FM2), soit un bourrelet de matière, soit un pli, soit un décollement partiel dudit front avant (2F) du profilé, soit une combinaison de tels éléments, de sorte à conférer audit front avant (2F) du profilé une surépaisseur par rapport à l'épaisseur (E2) nominale dudit profilé (2), si bien que ledit front avant (2F) du profilé présente, lorsqu'il parvient au rouleau de décollement (10), une hauteur par rapport à la surface de convoyage (3), dite « hauteur apparente », qui est supérieure à l'épaisseur (E2) nominale du profilé, de sorte à faciliter le franchissement du rouleau de décollement (10) par ledit front avant (2F) du profilé, dans le sens de la rotation de décollement (R10).

## Patentansprüche

1. Trennvorrichtung (1), welche dazu bestimmt ist, ein Profil (2) von einer Förderfläche (3) zu trennen, die das Profil (2) so in einer Längsrichtung (L0) fördert, dass das Profil (2) in einer Vorwärtsbewegung (FM2) transportiert wird, in deren Richtung sich das Profil (2) mit einem freien Ende, "Vorderflanke" (2F) genannt, voran bewegt, wobei die Vorrichtung **dadurch gekennzeichnet ist, dass** sie eine Ablösewalze (10) umfasst, die auf einer Halterung (11) um eine Achse, "Ablöseachse" (X10) genannt, drehbar gelagert ist und die dazu bestimmt ist, zwischen das Profil (2) und die Förderfläche (3) zu gelangen, um das Ablösen des Profils (2) von der Förderfläche (3) hervorzurufen, wobei die Halterung (11) und die Ablösewalze (10) dazu eingerichtet sind, eine Konfiguration annehmen zu können, "Eingriffskonfiguration" (C1) genannt, in der die Ablöseachse (X10) quer, vorzugsweise senkrecht, zur Längsrichtung (L0) und parallel zur Förderfläche (3) ausgerichtet ist und in der sich die Ablöseachse (X10) in einem Abstand (H10) von der Förderfläche (3) befindet, der so beschaffen ist, dass einerseits ein Zwischenraum (12) zwischen der Ablösewalze (10) und der Förderfläche (3) verbleibt, dass andererseits die Ablösewalze (10) einen Anschlag bildet, welcher der Voranbewegung der Vorderflanke (2F) des Profils auf der Förderfläche (3) entgegensteht und verhindert, dass die Vorderflanke (2F) den Zwischenraum (12) überwindet, und dass schließlich eine Drehung (R10) der Ablösewalze (10) um die Ablöseachse (X10) erzeugt werden kann, "Ablösedrehung" (R10) genannt, welche die Vorderflanke (2F) des Profils zwingt, sich von der Förderfläche (3) zu lösen, damit das Profil (2) seine Vorwärtsbewegung (FM2) fortsetzen kann, indem es die Ablösewalze (10) gegenüber dem Zwischenraum (12) umgeht und überwindet und dabei der Ablösedrehung (R10) folgt.

2. Vorrichtung nach Anspruch 1, **dadurch gekennzeichnet, dass** sie einen Ablösemotor (50) umfasst, der dazu eingerichtet ist, die Ablösedrehung (R10) zu erzeugen, gemäß der die Ablösewalze (10) bezüglich der Halterung (11) angetrieben wird.

3. Vorrichtung nach Anspruch 2, **dadurch gekennzeichnet, dass** sie eine Auswahlvorrichtung umfasst, die es ermöglicht, zu wählen zwischen einerseits einem aktiven Ablösemodus, in dem der Ablösemotor (50) aktiviert ist, um die Ablösewalze (10) aktiv in der Ablösedrehung (R10) bezüglich der Halterung (11) anzutreiben, und andererseits einem passiven Ablösemodus, in dem der Ablösemotor (50) deaktiviert und/oder von der Ablösewalze (10) getrennt ist, um die Ablösewalze (10) sich frei drehen zu lassen.

4. Vorrichtung nach einem der vorhergehenden Ansprüche, **dadurch gekennzeichnet, dass** die Ablösedrehung (R10) so beschaffen ist, dass der Betrag der Tangentialgeschwindigkeit der Oberfläche der Ablösewalze (10) in dem Punkt, wo das Profil (2) mit der Oberfläche der Ablösewalze (10) in Kontakt kommt, gleich dem Betrag der Tangentialgeschwindigkeit der Förderfläche (3) in der Längsrichtung (L0) in dem Punkt ist, wo sich das Profil von der Förderfläche (3) trennt.

5. Vorrichtung nach einem der vorhergehenden Ansprüche, **dadurch gekennzeichnet, dass** in der Eingriffskonfiguration der Abstand (H10) zwischen der Ablöseachse (10) und der Förderfläche (3) kleiner oder gleich der Dicke (E2) des Profils oder sogar kleiner oder gleich dem 0,8-Fachen der Dicke (E2) des Profils, kleiner oder gleich dem 0,7-Fachen der Dicke (E2) des Profils oder sogar kleiner oder gleich dem 0,5-Fachen der Dicke (E2) des Profils ist.

6. Vorrichtung nach einem der vorhergehenden Ansprüche, **dadurch gekennzeichnet, dass** sie mehrere Hilfswalzen (20) umfasst, die auf der Halterung (11) drehbar gelagert sind, vorzugsweise frei drehend auf der Halterung (11), und hintereinander und hinter der Ablösewalze (10), parallel zu dieser Ablösewalze (10), und wobei sie voneinander um Intervalle beabstandet sind, deren Größe streng kleiner als die Dicke (E2) des Profils ist, um das Profil (2), wenn dieses Letztere die Ablösewalze (10) überwunden hat, entlang einer gekrümmten Trajektorie zu begleiten, die von der Förderfläche (3) abweicht.

7. Vorrichtung nach Anspruch 6, **dadurch gekennzeichnet, dass** die Hilfswalzen (20) Durchmesser aufweisen, die größer als der Durchmesser (D10) der Ablösewalze (10) sind.

8. Vorrichtung nach einem der vorhergehenden Ansprüche, **dadurch gekennzeichnet, dass** die Halterung (11) von einem Positionierungsmechanismus (30) getragen wird, der es ermöglicht, den Abstand der Halterung (11) und demzufolge der Ablöseachse (X10) bezüglich der Förderfläche (3) einzustellen.

9. Vorrichtung nach Anspruch 8, **dadurch gekennzeichnet, dass** der Positionierungsmechanismus (30) ermöglicht, selektiv die Halterung (11) und die Ablösewalze (10) entweder in der Eingriffskonfiguration (C1) anzuordnen, so dass die Ablösewalze (10) mit dem Profil (2) zusammenwirken kann, um dieses von der Förderfläche (3) zu trennen, oder in einer aus dem Eingriff gelösten Konfiguration, in welcher, nachdem das Profil (2) auf einer Aufnahmefläche (7) in Eingriff gelangt ist, die von der Förderfläche (3) verschieden ist und in einem Abstand von der Förderfläche (3) der Trennvorrichtung (1) nachgelagert angeordnet ist, die Trennvorrichtung (1) und insbesondere die Ablösewalze (10) von dem Profil (2) gelöst ist, so dass sie das Profil (2) nicht mehr berührt.

10. Vorrichtung nach Anspruch 8 oder 9, **dadurch gekennzeichnet, dass** der Positionierungsmechanismus (30) ein Dämpfungsorgan (32) aufweist, welches ermöglicht, dass die Halterung (11) und insbesondere die Ablösewalze (10) unter dem Druck des Profils (2) elastisch zurückweicht, und dadurch, dass die Vorrichtung ein Überwachungssystem umfasst, das in der Lage ist zu erkennen, ob die Zurückbewegung der Halterung (11) einen vorbestimmten Schwellenwert überschreitet.

11. Vorrichtung nach Anspruch 10, **dadurch gekennzeichnet, dass** der Positionierungsmechanismus (30) von einem Pneumatikzylinder (31) angetrieben wird, welcher auch das Dämpfungsorgan (32) bildet.

12. Vorrichtung nach einem der vorhergehenden Ansprüche, **dadurch gekennzeichnet, dass** sie einen schwenkbaren Rechen (40) umfasst, der um eine Achse, "Rechenachse" (X40) genannt, schwenkbar gelagert ist, die parallel zur Förderfläche (3) und quer, vorzugsweise senkrecht, zur Längsrichtung (L0) ausgerichtet ist, und dadurch, dass der Rechen (40) eine Reihe von Zähnen (41) aufweist, die gegenüber der Förderfläche (3) in einem Abstand von dieser Förderfläche (3) positioniert sind, der von null verschieden und streng kleiner als die Dicke (E2) des Profils ist, so dass, wenn das Profil (2) der Vorwärtsbewegung (FM2) in der Längsrichtung (L0) auf der und vorzugsweise durch die Förderfläche (3) unterworfen wird, die Vorderflanke (2F) des Profils an den Zähnen (41) hängen bleiben und eine Schwenkung (R40) des Rechens (40) um die Rechenachse (X40) hervorrufen kann, wobei diese Schwenkung (R40) zur Folge hat, dass die Vorderflanke (2F) des Profils von der Vorderfläche (3) gelöst wird.

13. Extrusionsanlage (5), welche ein Mundstück (4) umfasst, das ermöglicht, durch kontinuierliche Extrusion ein Profil (2) herzustellen, und welche eine Förderfläche (3) aufweist, die das Profil (2) nach dem Mundstück aufnimmt und die das Profil (2) bis zu einer vorbestimmten Entfernung von dem Mundstück (4) transportiert, wobei die Anlage (5) **dadurch gekennzeichnet ist, dass** sie eine Trennvorrichtung (1) nach einem der Ansprüche 1 bis 12 umfasst, die dazu eingerichtet ist, das Profil (2) von der Förderfläche (3) abzunehmen, wenn das Profil (2) die vorbestimmte Entfernung erreicht.

14. Anlage nach Anspruch 13, **dadurch gekennzeichnet, dass** die Förderfläche (3) von einer Hauptwalze gebildet wird, welche mit dem Mundstück (4) einen Spalt (8) definiert, der die Dicke (E2) des Profils (2) bestimmt.

15. Anlage nach Anspruch 13 oder 14, **dadurch gekennzeichnet, dass** an der Vorderflanke (2F) des Profils, bezüglich der Vorwärtsbewegung (FM2) vor der Position der Ablösewalze (10), entweder ein Materialwulst oder eine Falte oder eine teilweise Ablösung der Vorderflanke (2F) des Profils oder eine Kombination solcher Elemente erzeugt wird, um so der Vorderflanke (2F) des Profils eine Überdicke bezüglich der Nenndicke (E2) des Profils (2) zu verleihen, so dass die Vorderflanke (2F) des Profils, wenn sie die Ablösewalze (10) erreicht, eine Höhe bezüglich der Förderfläche (3) aufweist, "scheinbare Höhe" genannt, welche größer als die Nenndicke (E2) des Profils ist, um so die Überwindung der Ablösewalze (10) durch die Vorderflanke (2F) des Profils in der Richtung der Ablösedrehung (R10) zu erleichtern.

## Claims

1. Separation device (1) intended to separate a profiled element (2) from a conveying surface (3) which conveys said profiled element (2) in a longitudinal direction (L0) so as to forward the profiled element (2) with an advancing movement (FM2) in the direction of which said profiled element (2) displays a free end, termed "front edge" (2F), said device being **characterized in that** it comprises a detachment roller (10) which is mounted so as to be able to rotate on a support (11) about an axis, termed "detachment axis" (X10), and which is intended to be interposed between the profiled element (2) and the conveying surface (3) in order to cause the profiled element (2) to become detached from said conveying surface (3), said support (11) and the detachment roller (10) being arranged to be able to adopt a configuration, termed "engagement configuration" (C1), in which the detachment axis (X10) is oriented transversely, preferably perpendicularly, to the longitudinal direction (L0) and parallel to the conveying surface (3), and in which the detachment axis (X10) is situated at a distance (H10) from the conveying surface (3) which is such that, on the one hand, a gap (12) remains between said detachment roller (10) and the conveying surface (3), that, on the other hand, the detachment roller (10) forms a stop which opposes the progression of the front edge (2F) of the profiled element on the conveying surface (3) and prevents said front edge (2F) from crossing the gap (12), and that, finally, there can be generated a rotation (R10) of the detachment roller (10) about the detachment axis (X10), termed "detachment rotation" (R10), that constrains the front edge (2F) of the profiled element to become detached from the conveying surface (3) so that the profiled element (2) can continue its advancing movement (FM2) by bypassing and crossing the detachment roller (10) on the opposite side from the gap (12), while following said detachment rotation (R10).

2. Device according to Claim 1, **characterized in that** it comprises a detachment motor (50) designed to generate the detachment rotation (R10) according to which the detachment roller (10) is driven with respect to the support (11).

3. Device according to Claim 2, **characterized in that** it comprises a selector for selecting between, on the one hand, an active detachment mode, according to which the detachment motor (50) is activated so as to actively drive the detachment roller (10) in the detachment rotation (R10) with respect to the support (11), and, on the other hand, a passive detachment mode, in which said detachment motor (50) is deactivated and/or disconnected from the detachment roller (10) so as to allow the detachment roller (10) to rotate freely.

4. Device according to one of the preceding claims, **characterized in that** the detachment rotation (R10) is such that the norm of the tangential speed of the surface of the detachment roller (10), at the point where the profiled element (2) comes into contact with said surface of the detachment roller (10), is equal to the norm of the tangential speed of the conveying surface (3), in the longitudinal direction (L0), at the point where said profiled element is separated from said conveying surface (3).

5. Device according to one of the preceding claims, **characterized in that**, in the engagement configuration, the distance (H10) between the detachment axis (10) and the conveying surface (3) is equal to or less than the thickness (E2) of the profiled element, or equal to or less than 0.8 times the thickness (E2) of the profiled element, equal to or less than 0.7 times the thickness (E2) of the profiled element, or even equal to or less than 0.5 times the thickness (E2) of the profiled element.

6. Device according to one of the preceding claims, **characterized in that** it comprises a plurality of auxiliary rollers (20) which are mounted rotatably on the support (11), preferably so as to rotate freely on the support (11), and arranged in succession to one another and in succession to the detachment roller (10), parallel to said detachment roller (10), and being spaced from one another by intervals whose size is strictly less than the thickness (E2) of the profiled element, in order to accompany the profiled element (2), when the latter has crossed the detachment roller (10), in a curved path which deviates from the conveying surface (3).

7. Device according to Claim 6, **characterized in that** the auxiliary rollers (20) have diameters greater than the diameter (D10) of the detachment roller (10).

8. Device according to one of the preceding claims, **characterized in that** the support (11) is carried by a positioning mechanism (30) which makes it possible to adjust the distance of the support (11), and therefore of the detachment axis (X10), with respect to the conveying surface (3).

9. Device according to Claim 8, **characterized in that** the positioning mechanism (30) makes it possible to selectively place the support (11), and the detachment roller (10), either in the engagement configuration (C1), such that the detachment roller (10) can cooperate with the profiled element (2) to separate the latter from the conveying surface (3), or in a disengagement configuration in which, once the profiled element (2) is engaged on a receiving surface (7) separate from the conveying surface (3) and situated at a distance from said conveying surface (3) downstream of the separation device (1), said separation device (1), and in particular the detachment roller (10), is disengaged from said profiled element (2) so as to no longer touch said profiled element (2).

10. Device according to Claim 8 or 9, **characterized in that** the positioning mechanism (30) has a damping member (32) which allows the support (11), and more particularly the detachment roller (10), to recoil elastically under the thrust of the profiled element (2), and **in that** the device comprises a monitoring system which is capable of detecting if the recoiling movement of the support (11) exceeds a predetermined threshold.

11. Device according to Claim 10, **characterized in that** the positioning mechanism (30) is driven by a pneumatic cylinder (31), which also forms the damping member (32).

12. Device according to any one of the preceding claims, **characterized in that** it comprises a tilting harrow (40) which is mounted pivotably about an axis, termed "harrow axis" (X40), which is parallel to the conveying surface (3), and transverse and preferably perpendicular to the longitudinal direction (L0), and **in that** said harrow (40) has a row of teeth (41) which are positioned opposite the conveying surface (3), at a distance from said conveying surface (3) which is non-zero and strictly less than the thickness (E2) of the profiled element, such that, when the profiled element (2) is subjected to the advancing movement (FM2) in the longitudinal direction (L0) on, and preferably by, the conveying surface (3), the front edge (2F) of said profiled element can poke onto the teeth (41) and cause a tilting (R40) of the harrow (40) about the harrow axis (X40), the consequence of which tilting (R40) is to detach the front edge (2F) of the profiled element from the conveying surface (3).

13. Extrusion installation (5) comprising a die (4) for continuously producing a profiled element (2) by extrusion, and which comprises a conveying surface (3) which receives the profiled element (2) downstream of said die and which forwards said profiled element (2) to a predetermined distance from the die (4), said installation (5) being **characterized in that** it comprises a separation device (1) according to any one of Claims 1 to 12, arranged to remove the profiled element (2) from said conveying surface (3) when said profiled element (2) reaches the predetermined distance.

14. Installation according to Claim 13, **characterized in that** the conveying surface (3) is formed by a main roller which defines, with the die (4), a gap (8) which determines the thickness (E2) of the profiled element (2).

15. Installation according to Claim 13 or 14, **characterized in that** there is generated at the front edge (2F) of the profiled element, upstream of the position of the detachment roller (10) with respect to the advancing movement (FM2), either a material bead, or a fold, or a partial detachment of said front edge (2F) of the profiled element, or a combination of such elements, so as to give said front edge (2F) of the profiled element an excess thickness with respect to the nominal thickness (E2) of said profiled element (2), with the result that said front edge (2F) of the profiled element has, when it reaches the detachment roller (10), a height with respect to the conveying surface (3), termed "apparent height", that is greater than the nominal thickness (E2) of the profiled element, thereby facilitating the crossing of the detachment roller (10) by said front edge (2F) of the profiled element, in the direction of the detachment rotation (RIO).
